# EUROPEAN PATENT APPLICATION

(11) **EP 4 703 161 A1**
(43) Date of publication of application: **04.03.2026**
(21) Application number: 24196383.4
(22) Date of filing: 26.08.2024
(51) Int. Cl.: B60G 17/018, G01M 17/04, G07C 5/08

(54) **SYSTEM AND METHOD TO AVOID EXCESSIVE AGING OF A VEHICLE SUSPENSION SYSTEM**

(71) Applicant: Volvo Truck Corporation, 405 08 Göteborg (SE)
(72) Inventor: STJERNBERG, Oscar, 411 35 GÖTEBORG (SE); WILHELMSSON, Martin, 423 39 TORSLANDA (SE)
(74) Representative: Kransell & Wennborg KB

(57) **Abstract**

A computer system (100) comprising processing circuitry (102) configured to: determine a present temperature (112) of a suspension system (106) of a vehicle (104), predict a future temperature of the suspension system based on the present temperature of the suspension system, historical driving data (118) for an upcoming road stretch (152) for the vehicle and a suspension temperature prediction model (120) , and provide an output (136) that depends on the predicted temperature of the suspension system.

## Description

### TECHNICAL FIELD

The disclosure relates generally to suspension systems of vehicles. In particular aspects, the disclosure relates to system and method to avoid excessive aging of a vehicle suspension system. The disclosure can be applied to heavy-duty vehicles, such as trucks, buses, and construction equipment, among other vehicle types such as passenger cars. Although the disclosure may be described with respect to a particular vehicle, the disclosure is not restricted to any particular vehicle.

### BACKGROUND

For comfortable and smooth driving, it's necessary for a vehicle to be fitted with a properly functional suspension system, often supplied as a pneumatic or hydraulic suspension system. Damper replacement is expensive and time consuming and thus leads to costly downtime of the vehicle. Thus, it's of interest for the driver and/or owner to extend the life span of the suspension for as long as possible and to avoid excessive wear.

### SUMMARY

According to a first aspect of the disclosure, there is provided a computer system comprising processing circuitry configured to: determine a present temperature of a suspension system of a vehicle, predict a future temperature of the suspension system based on the present temperature of the suspension system, historical driving data for an upcoming road stretch for the vehicle, and a suspension temperature prediction model, and provide an output that depends on the predicted temperature of the suspension system.

The first aspect of the disclosure may seek to avoid excessive aging of the suspension system. This is provided by predicting events where high suspension temperature may arise such that action can be taken to avoid the high suspension temperatures. A technical benefit may include that excessive wear and tear of the suspension system is avoided, and the lifetime of the suspension system can be prolonged.

Optionally in some examples, including in at least one preferred example, wherein the processing circuitry is further configured to: retrieve the historical driving data from secondary vehicles. A technical benefit may that by incorporating data from multiple vehicles that have already traversed the same or similar road conditions, the computer system can make more informed predictions about the upcoming driving events. In other words, the shared data allows for better anticipation of factors that influence suspension temperature, such as road roughness and environmental conditions, without requiring the primary vehicle to collect this data on its own. Consequently, the system can more effectively prevent excessive wear and tear on the suspension system by providing timely and accurate recommendations to the driver or the vehicle's autonomous control system.

Optionally in some examples, including in at least one preferred example, wherein the output is an indication including a recommended maximum driving speed to reduce wear of the suspension system. A technical benefit may be that by recommending a specific maximum driving speed, the computer system helps prevent the suspension system from reaching excessively high temperatures, thereby minimizing wear, and extending the lifespan of the suspension components. The recommended maximum driving speed may be extracted from the model of the suspension temperature, by setting a desired suspension temperature that does not lead to excessive wear and calculate or model the maximum speed that such desired suspension temperature allows.

Optionally in some examples, including in at least one preferred example, wherein the processing circuitry is further configured to: determine that the predicted future temperature of the suspension system exceeds a threshold temperature, and in response, provided output is to set a maximum speed limit of the vehicle for the upcoming road stretch. Automatically setting a maximum speed limit when the predicted future temperature of the suspension system exceeds a threshold, it provides an automated and immediate response to prevent potential damage to the suspension system. That is, when the predicted future temperature of the suspension system exceeds a threshold temperature, the provided output includes to set a maximum speed limit of the vehicle for the upcoming road stretch. A technical benefit may be that the computer system ensures that the vehicle operates within safe speed limits without requiring active intervention from the driver, thereby further protecting the suspension system from excessive wear, and prolonging its operational lifespan.

Optionally in some examples, including in at least one preferred example, wherein the processing circuitry is further configured to: collect driving data of a road stretch where the suspension temperature is determined to increase, and share driving data as historical driving data with at least one secondary vehicle. A technical benefit may be that a better understanding of road conditions and their effects on suspension systems is provided for all vehicles within the fleet, ultimately providing for more accurate decision making for e.g., setting a speed of the vehicle approaching a given road stretch.

Optionally in some examples, including in at least one preferred example, wherein the processing circuitry is further configured to: collect driving data of a road stretch where the suspension temperature is determined to increase, and upload driving data as historical driving data to a server. A technical benefit may be that database of driving conditions and suspension responses from multiple vehicles over time may be provided. This database can be used to improve the predictive models, leading to more accurate and reliable temperature predictions for all vehicles connected to the system.

Optionally in some examples, including in at least one preferred example wherein the processing circuitry is configured to: predict the future temperature of the suspension system further based on the current vehicle load distribution per axle and total vehicle weight. A technical benefit may be that by using more information about the vehicle a more accurate prediction of future temperature of the suspension system can be made and consequently more accurate output such as warnings and recommendations concerning vehicle speed.

Optionally in some examples, including in at least one preferred example the suspension temperature being measured or modelled. If the temperature is measured directly, the system can provide real-time, highly accurate data about the suspension's thermal state, allowing for immediate and precise predictions and interventions. If the temperature is modeled, the system can still function without the need for additional sensors, which may reduce costs, simplify installation, and make the system applicable to a wider range of vehicles, including those where adding temperature sensors might be impractical.

There is further provided a vehicle comprising the computer system disclosed herein.

Optionally in some examples, including in at least one preferred example, the vehicle may further comprise: a hydraulic or pneumatic suspension system.

Optionally in some examples, including in at least one preferred example, the vehicle may be an autonomous vehicle and the predicted temperature is used for setting a maximum temperature for the vehicle in the area of the road stretch.

According to a second aspect of the disclosure, there is provided a computer-implemented method, comprising: determining, by processing circuitry of a computer system, a present temperature of a suspension system of a vehicle, predicting, by the processing circuitry, a future temperature of the suspension system based on the present temperature of the suspension system, historical driving data for an upcoming road stretch for the vehicle and, a suspension temperature prediction model, and providing, by the processing circuitry, an output that depends on the predicted temperature of the suspension system.

The second aspect of the disclosure may seek to avoid excessive aging of the suspension system. This is provided by predicting event where high suspension temperature may arise such that action can be taken to avoid such high suspension temperatures. A technical benefit may include that excessive wear and tear of the suspension system is avoided, and the lifetime of the suspension system can be prolonged.

Optionally in some examples, including in at least one preferred example, the method may further comprise: retrieving, by the processing circuitry, the historical driving data from secondary vehicles. A technical benefit may that by incorporating data from multiple vehicles that have already traversed the same or similar road conditions, the computer system can make more informed predictions about the upcoming driving events. In other words, the shared data allows for better anticipation of factors that influence suspension temperature, such as road roughness and environmental conditions, without requiring the primary vehicle to collect this data on its own. Consequently, the system can more effectively prevent excessive wear and tear on the suspension system by providing timely and accurate recommendations to the driver or the vehicle's autonomous control system.

Optionally in some examples, including in at least one preferred example, the output may be an indication including a recommended maximum driving speed to reduce wear of the suspension system. A technical benefit may be that by recommending a specific maximum driving speed, the computer system helps prevent the suspension system from reaching excessively high temperatures, thereby minimizing wear, and extending the lifespan of the suspension components.

Optionally in some examples, including in at least one preferred example, the method may further comprise: determining, by the processing circuitry, that the predicted future temperature of the suspension system exceeds a threshold temperature, and in response, the provided output is to set a maximum speed limit of the vehicle for the upcoming road stretch. Automatically setting a maximum speed limit when the predicted future temperature of the suspension system exceeds a threshold, it provides an automated and immediate response to prevent potential damage to the suspension system. A technical benefit may be that the computer system ensures that the vehicle operates within safe speed limits without requiring active intervention from the driver, thereby further protecting the suspension system from excessive wear, and prolonging its operational lifespan.

Optionally in some examples, including in at least one preferred example, the method may further comprise: collecting, by the processing circuitry, driving data of a road stretch where the suspension temperature is determined to increase, and sharing, by the processing circuitry, driving data as historical driving data with at least one secondary vehicle. A technical benefit may that a better understanding of road conditions and their effects on suspension systems is provided for all vehicles within the fleet., ultimately providing for more accurate decision making for e.g., setting a speed of the vehicle approaching a given road stretch.

Optionally in some examples, including in at least one preferred example, the method may further comprise: collecting, by the processing circuitry, driving data a road stretch where the suspension temperature is determined to increase, and uploading, by the processing circuitry, driving data as historical driving data to a server. A technical benefit may be that database of driving conditions and suspension responses from multiple vehicles over time may be provided. This database can be used to improve the predictive models, leading to more accurate and reliable temperature predictions for all vehicles connected to the system.

Optionally in some examples, including in at least one preferred example, the method may comprise: predicting, by the processing circuitry, the future temperature of the suspension system further based on the current vehicle load distribution per axle and total vehicle weight. A technical benefit may be that by using more information about the vehicle a more accurate prediction of future temperature of the suspension system can be made and consequently more accurate output such as warnings and recommendations concerning vehicle speed.

There is further provided a computer program product comprising program code for performing, when executed by the processing circuitry, the method of any of the herein disclosed examples.

There is further provided a non-transitory computer-readable storage medium comprising instructions, which when executed by the processing circuitry, cause the processing circuitry to perform the method of any of the herein disclosed examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system according to an example.
**FIG. 2** schematically illustrates a vehicle in the form of a truck travelling on a road and approaching a bumpy road stretch according to an example.
**FIG. 3** **is** a flow chart of an exemplary method to reduce excessive wear on a suspension system according to an example.
**FIG. 4** is another view of **FIG. 1****,** according to an example.
**FIG. 5** is a flow chart of a method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Vehicle suspension systems provide for comfortable driving and travelling with vehicles. Traditional suspension systems are vulnerable to overheating, especially when vehicles are driven at high speeds on rough terrain or under heavy loads. This overheating accelerates aging and degradation of suspension components, leading to frequent maintenance and replacements which also takes the vehicle out of commission for some time.

As a suspension system is exposed to high temperature, components of the suspension system may wear. For example, bushings may crack, and wear, shocks and struts may deteriorate due to overheating, for example due to internal oil in the shocks or struts that lose its viscosity due to being overheated during excessive damping operations. These are some examples of suspension system wear and tear that is desirable to avoid.

The examples described herein addresses the above by predicting suspension system temperatures based on e.g., real-time data such as present suspension temperature, historical driving patterns, and vehicle-specific factors. By providing drivers or autonomous systems with timely recommendations on optimal driving speeds or automatically adjusting the vehicle's speed, the system helps to prevent the suspension from reaching harmful temperatures. This proactive approach extends the life of the suspension system, reduces maintenance costs, and improves overall vehicle reliability.

The temperature of a suspension system can be modelled based on road surface, vehicle weight, speed, ambient conditions, vehicle configuration (tires, air pressure etc.), historical driving data as well as GPS/GNSS data. Together with a prediction model for upcoming driving event the temperature for the suspension system can be predicted. Depending on what the predicted temperature for the suspension is predicted to be the driver can be notified that there is a high risk for excessive heating of the suspension system and feedback to the driver with a recommended maximum vehicle speed in order to minimize wear and tear of the suspension system.

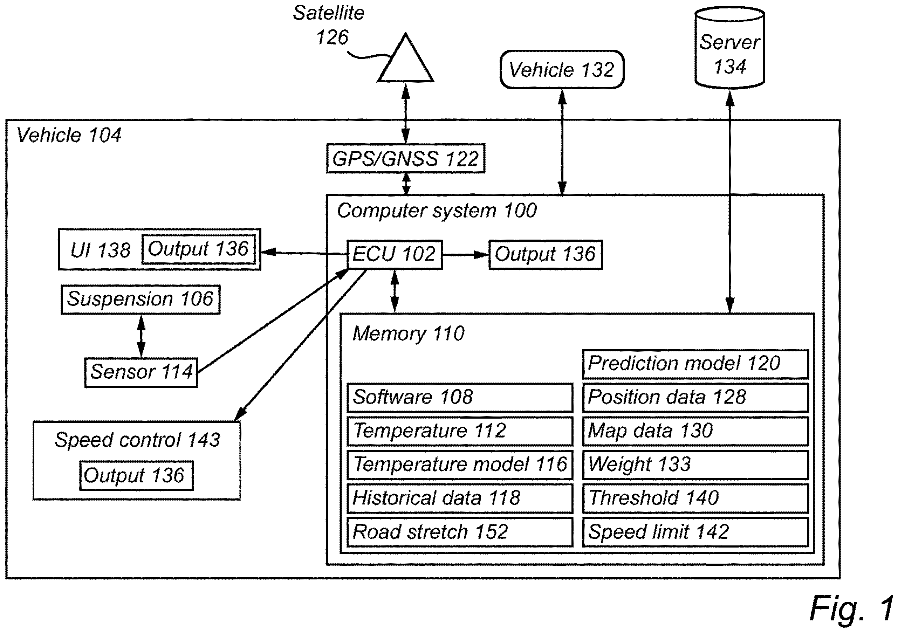

**FIG. 1** is an exemplary system diagram of a computer system 100 according to an example.

The computer system 100 comprises processing circuitry 102, or generally refer to as an electronic control unit, ECU. The computer system 100 may be comprised in a vehicle 104 having a suspension system 106 such as a hydraulic suspension system or a pneumatic suspension system. The vehicle comprises one suspension system 106 for each wheel of the vehicle 104.

The processing circuitry 102 has access to a computer program product 108 for performing various steps described herein. The computer program product 108 is stored on a non-transitory computer-readable storage medium 110.

The processing circuitry 102 is configured to determine a present temperature 112 of the suspension system 106 of the vehicle 104. The present temperature 112 can be determined by using a temperature sensor 114 for directly measuring the temperature of the suspension system in real-time. In other examples, or when the sensors 114 malfunction, the processing circuitry 102 may use a temperature model 116 for modelling the temperature of the suspension system 106. The model 116 may determine the present temperature based on input data such as vehicle speed, vehicle weight, road conditions etc.

The temperature may be determined for the suspension system of a single wheel, that is, the analysis described herein may be performed individually for the suspension systems for each wheel, or a combined analysis may be performed. In case of a combined analysis an average or median suspension temperature of the suspension temperatures of the suspension systems may be considered. That is, the processing circuitry 102 may be configured to determine a present temperature 112 of one of the suspension systems 106 of the vehicle 104. Alternatively, the processing circuitry 102 is configured to determine a present temperature 112 of more than one of the suspension systems 106 of the vehicle 104, and to determine an average or median suspension temperature of the determined present temperatures.

The processing circuitry 102 takes the present suspension temperature 112 as input along with historical driving data 118 for an upcoming road stretch for the vehicle 104 and a suspension temperature prediction model 120 for predicting a future temperature of the suspension system 106 at the upcoming road stretch.

The vehicle 104 is equipped with a navigation system 122 such as a GPS/GNSS for determining a position of the vehicle 104 through satellite 126 communication. The processing circuitry 102 receives position data 128 from the navigation system 122 from which can determine, together with map data 130 from the navigation system 122, that the vehicle 104 is approaching a certain road stretch or area. A certain road stretch may for example be pre-known to cause high suspension temperatures and may therefore trigger the analysis. Alternatively, or additionally, the analysis may be continuously performed for upcoming road stretches.

The historical driving data 118 includes data of previous occasion where vehicles has passed that road stretch. Such data 118 include indications of that the upcoming road stretch may cause high suspension system temperature. The data 118 includes vehicle-specific data of the previous occasions such as vehicle speed, vehicle weight, cargo weight, road friction and bumpiness/unevenness of the upcoming road. The data 118 may further include historical temperature measurements/recordings, to indicate how much the suspension temperatures have increased during previous occasions when the road stretch was travelled.

To provide a more accurate prediction of the future temperature of the suspension system, the processing circuitry 102 may further take a current vehicle load distribution per axle and total vehicle weight 133 as input. This provides a more precise picture of the load on each of the suspension systems 106 of the vehicle 104. The vehicle weight and load distribution data 133 may be measured by on-board sensors and/or off-board sensors and provided as input prior to driving off.

The suspension temperature prediction model 120 could be a temperature model that depends on input relating to the historical driving data 118 mentioned above, for example vehicle speed, vehicle weight, road conditions etc. The model uses these inputs and predicts an estimate of the future suspension temperature. The model may be a mathematical model or a look-up table from which a future suspension temperature can be extrapolated from the present temperature and present vehicle related parameters.

The processing circuitry 102 may retrieve the historical driving data 118 from secondary vehicles 132 either via vehicle-to-vehicle communication or by retrieving the data 118 from a server 134. Vehicles connected to the fleet or network may upload their data 118 to the server so that it can be shared with other vehicles. That is, the processing circuitry 102 may collect driving data of a road stretch where the suspension temperature is determined to increase and share that driving data as historical driving data 118 with at least one secondary vehicle 132. Alternatively, or additionally, the driving data is uploaded as historical driving data to the server 134.

The processing circuitry provides an output 136 that depends on the predicted temperature of the suspension system 106.

The output 106 may be provided in different forms. For example, the output 106 may be an indication including a recommended maximum driving speed to reduce wear of the suspension system 106. That is, the driver is informed of that a road stretch ahead of the vehicle has road conditions that are not suitable for high speeds. To reduce wear on the suspension system, the output indicates the maximum driving speed as a recommendation to the driver, for example via a user interface 138 of the vehicle 104 such as a display or a speaker.

In some examples, the processing circuitry 102 determines that the predicted future temperature of the suspension system 106 exceeds a threshold temperature 140. In such case, the provided output 136 may be to set a maximum speed limit 142 of the vehicle 104 for the upcoming road stretch. In other words, the vehicle 104 will not be able to travel faster than the set maximum speed limit 142. This may be especially suitable for, but not limited to, when the vehicle 104 is an autonomous vehicle or semi-autonomous vehicle. For setting a maximum speed limit the output 136 may be provided to a vehicle control system 143 able to control speed limits of the vehicle.

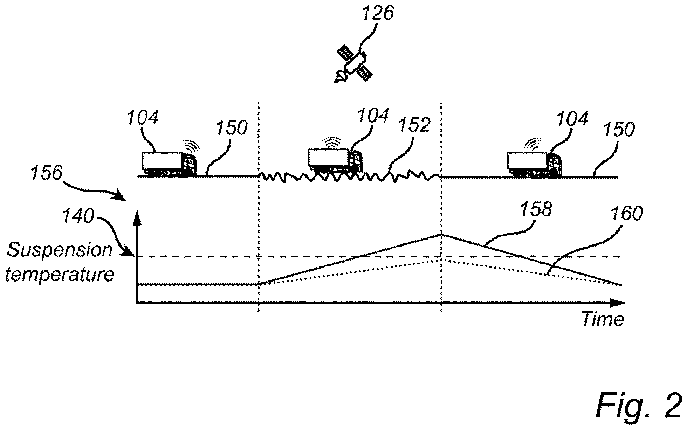

**FIG. 2** schematically illustrates a vehicle in the form of a truck 104 travelling on a road 150. The vehicle comprises a suspension system 106 and approaches an upcoming road stretch 152 which road conditions are "bumpy". That is, the vehicle 104 is approaching a bumpy road stretch 152. The vehicle 104 comprises a processing circuitry 102 that may communicate via GPS/GNNS 122 with a satellite 126 for determining its position, and for determining that it is approaching the road stretch 152.

The graph 156 illustrates suspension temperature over time as the vehicle is travelling along the road 150 including the bumpy road stretch 154. The graph 156 also indicates a temperature threshold 140 at which wear is more prominent. The temperature threshold 140 may be tested empirically.

The solid curve 158 indicates the temperature of the suspension system if the vehicle 104 is traveling at a high speed. The temperature rises as the vehicle travels the bumpy area 152 and eventually exceeds the threshold 140. With examples herein, the speed of the vehicle 104 is intended to instead follow the dotted curve 160, that is, the speed is reduced in the bumpy road stretch 152 such that the temperature does not rise to or exceed the threshold temperature 140.

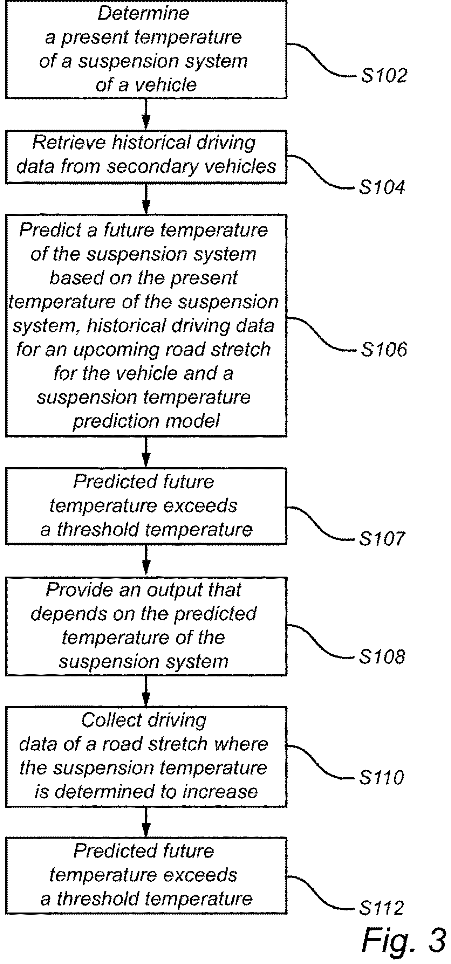

**FIG. 3** is a flow-chart of method steps according to examples of a computer-implemented method.

In step S102, the processing circuitry 102 determines a present temperature of a suspension system 106 of a vehicle 104 prior to that it reaches the bumpy road stretch 152. This determination is performed either by modelling 116 or by means of a measurement using sensors 114.

In step S104, the processing circuitry 102 may retrieve historical driving data 118 from secondary vehicles 132 or from a server 134.

In step S106, the processing circuitry 102 predicts a future temperature of the suspension system 106 based on the present temperature 112 of the suspension system, the historical driving data 118 for the upcoming road stretch 152 and a suspension temperature prediction model 120.

In step S108, the processing circuitry 102 provides an output that depends on the predicted temperature of the suspension system 106. The output 136 is an indication including a recommended maximum driving speed 142 to reduce wear of the suspension system.

However, in case the predicted future temperature of the suspension system exceeds a threshold temperature 140 in optional step S107, the provided output 120 in step S 108 is to set a maximum speed limit 142 of the vehicle 104 for the upcoming road stretch 152. It is also possible that the indication including the recommended maximum driving speed 142 to reduce wear of the suspension system is provided only when the predicted future temperature of the suspension system exceeds the threshold temperature 140.

In step S 110, the processing circuitry 102 collects driving data of a road stretch 152 where the suspension temperature is determined to increase. The driving data is shared with secondary vehicles 132 and/or uploaded to a server 134 for other vehicles to access in step S112.

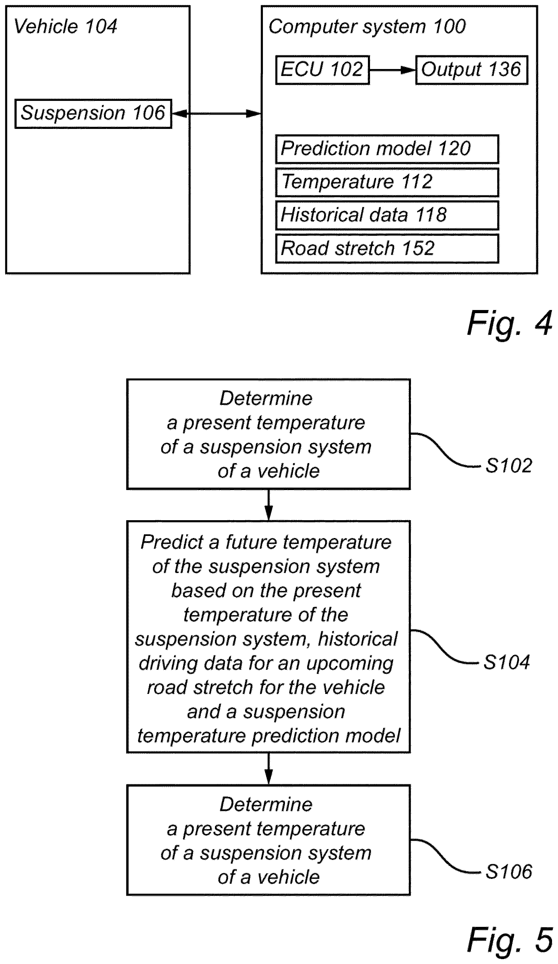

**FIG. 4** is another view of **FIG. 1****,** according to an example. Fig. 4 illustrates a computer system 100 comprising processing circuitry 102 configured to: determine a present temperature 112 of a suspension system 106 of a vehicle 104, predict a future temperature of the suspension system based on the present temperature of the suspension system, historical driving data 118 for an upcoming road stretch 152 for the vehicle and a suspension temperature prediction model 120, and provide an output 136 that depends on the predicted temperature of the suspension system.

**FIG. 5** is a flow chart of a method to according to an example. In step S102, determining, by processing circuitry 102 of a computer system 100, a present temperature of a suspension system 106 of a vehicle 104. In step S106 predicting, by the processing circuitry 102, a future temperature of the suspension system 106 based on the present temperature 112 of the suspension system 106, historical driving data 118 for an upcoming road stretch 152 for the vehicle 104 and a suspension temperature prediction model 120. In step S108, providing, by the processing circuitry 102, an output 136 that depends on the predicted temperature of the suspension system 106.

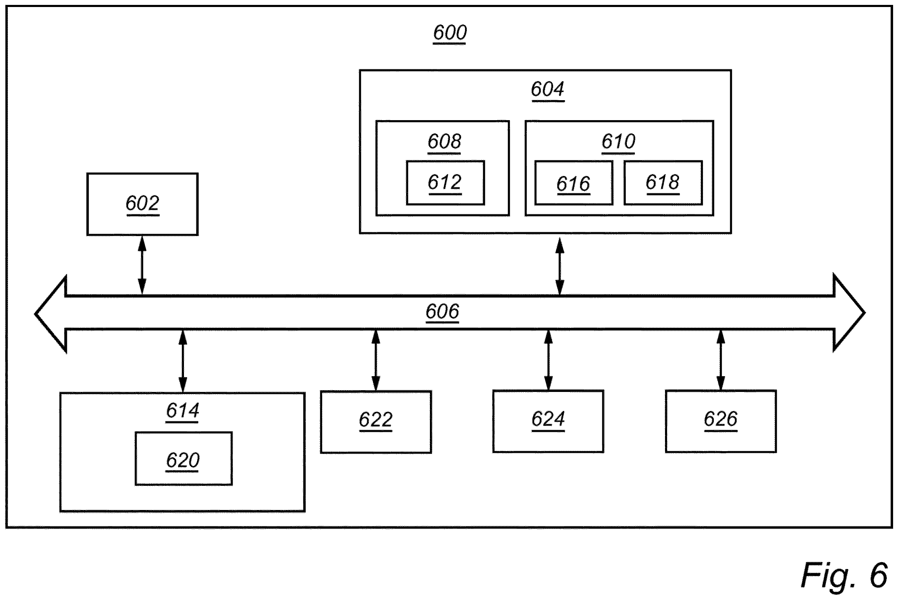

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., randomaccess memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: determine a present temperature of a suspension system of a vehicle, predict a future temperature of the suspension system based on the present temperature of the suspension system, historical driving data for an upcoming road stretch for the vehicle and a suspension temperature prediction model, and provide an output that depends on the predicted temperature of the suspension system.

Example 2: The computer system of example 1, wherein the processing circuitry is further configured to: retrieve the historical driving data from secondary vehicles.

Example 3: The computer system of any of examples 1-2, wherein the output is an indication including a recommended maximum driving speed to reduce wear of the suspension system.

Example 4: The computer system of any of examples 1-3, wherein the processing circuitry is further configured to: determine that the predicted future temperature of the suspension system exceeds a threshold temperature, and in response, the provided output is to set a maximum speed limit of the vehicle for the upcoming road stretch.

Example 5: The computer system of any of examples 1-4, wherein the processing circuitry is further configured to: collect driving data of a road stretch where the suspension temperature is determined to increase, and share driving data as historical driving data with at least one secondary vehicle.

Example 6: The computer system of any of examples 1-5, wherein the processing circuitry is further configured to: collect driving data of a road stretch where the suspension temperature is determined to increase, and upload driving data as historical driving data to a server.

Example 7: The computer system of any of examples 1-6, wherein the processing circuitry is configured to: predict the future temperature of the suspension system further based on the current vehicle load distribution per axle and total vehicle weight.

Example 8: The computer system of any of examples 1-7, the suspension temperature being measured or modelled.

Example 9: A vehicle comprising the computer system of any of examples 1-8.

Example 10: The vehicle of example 9, further comprising: a hydraulic or pneumatic suspension system.

Example 11: The vehicle of any of examples 9-10, the vehicle being an autonomous vehicle and the predicted temperature is used for setting a maximum temperature for the vehicle in the area of the road stretch.

Example 12: A computer-implemented method, comprising: determining, by processing circuitry of a computer system, a present temperature of a suspension system of a vehicle, predicting, by the processing circuitry, a future temperature of the suspension system based on the present temperature of the suspension system, historical driving data for an upcoming road stretch for the vehicle and a suspension temperature prediction model, and providing, by the processing circuitry, an output that depends on the predicted temperature of the suspension system.

Example 13: The method of example 12, further comprising: retrieving, by the processing circuitry, the historical driving data from secondary vehicles.

Example 14: The method of any of examples 12-13, wherein the output is an indication including a recommended maximum driving speed to reduce wear of the suspension system.

Example 15: The method of any of examples 12-14, further comprising: determining, by the processing circuitry, that the predicted future temperature of the suspension system exceeds a threshold temperature, and in response, the provided output is to set a maximum speed limit of the vehicle for the upcoming road stretch.

Example 16: The method of any of examples 12-15, further comprising: collecting, by the processing circuitry, driving data of a road stretch where the suspension temperature is determined to increase, and sharing, by the processing circuitry, driving data as historical driving data with at least one secondary vehicle.

Example 17: The method of any of examples 12-16, further comprising: collecting, by the processing circuitry, driving data a road stretch where the suspension temperature is determined to increase, and uploading, by the processing circuitry, driving data as historical driving data to a server.

Example 18: The method of any of examples 12-17, comprising: predicting, by the processing circuitry, the future temperature of the suspension system further based on the current vehicle load distribution per axle and total vehicle weight.

Example 19: A computer program product comprising program code for performing, when executed by the processing circuitry, the method of any of examples 12-18.

Example 20: A non-transitory computer-readable storage medium comprising instructions, which when executed by the processing circuitry, cause the processing circuitry to perform the method of any of examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
determine a present temperature (112) of a suspension system (106) of a vehicle (104),
predict a future temperature of the suspension system based on the present temperature of the suspension system, historical driving data (118) for an upcoming road stretch (152) for the vehicle and a suspension temperature prediction model (120) , and
provide an output (136) that depends on the predicted temperature of the suspension system.

2. The computer system of claim 1, wherein the processing circuitry is further configured to:
retrieve the historical driving data from secondary vehicles (132).

3. The computer system of any of claims 1-2, wherein the output is an indication including a recommended maximum driving speed (142) to reduce wear of the suspension system.

4. The computer system of any of claims 1-3, wherein the processing circuitry is further configured to:
determine that the predicted future temperature of the suspension system exceeds a threshold temperature (140), and in response, the provided output is to set a maximum speed limit (142) of the vehicle for the upcoming road stretch.

5. The computer system of any of claims 1-4, wherein the processing circuitry is further configured to:
collect driving data of a road stretch where the suspension temperature is determined to increase, and
share driving data as historical driving data with at least one secondary vehicle.

6. The computer system of any of claims 1-5, wherein the processing circuitry is further configured to:
collect driving data of a road stretch where the suspension temperature is determined to increase, and
upload driving data as historical driving data to a server (134).

7. The computer system of any of claims 1-6, wherein the processing circuitry is configured to:
predict the future temperature of the suspension system further based on the current vehicle load distribution per axle and total vehicle weight.

8. The computer system of any of claims 1-7, the suspension temperature being measured or modelled.

9. A vehicle comprising the computer system of any of claims 1-8.

10. The vehicle of claim 9, the vehicle being an autonomous vehicle and the predicted temperature is used for setting a maximum temperature for the vehicle in the area of the road stretch.

11. A computer-implemented method, comprising:
determining (S102), by processing circuitry of a computer system, a present temperature of a suspension system of a vehicle,
predicting (S106), by the processing circuitry, a future temperature of the suspension system based on the present temperature of the suspension system, historical driving data for an upcoming road stretch for the vehicle and a suspension temperature prediction model, and
providing (S108), by the processing circuitry, an output that depends on the predicted temperature of the suspension system.

12. The method of claim 11, further comprising:
retrieving (S104), by the processing circuitry, the historical driving data from secondary vehicles.

13. The method of any of claims 12-13, wherein the output is an indication including a recommended maximum driving speed to reduce wear of the suspension system, or the provided output is to set a maximum speed limit of the vehicle for the upcoming road stretch.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
